# EUROPÄISCHE PATENTANMELDUNG

(11) **EP 2 529 878 A1**
(43) Veröffentlichungstag der Anmeldung: **05.12.2012**
(21) Anmeldenummer: 12161386.3
(22) Anmeldetag: 27.03.2012
(51) Int. Cl.: B23P 11/00, F02M 55/00

(54) **Verfahren zum Herstellen einer Pressverbindung zwischen zwei Bauteilen und Bauteileverbund aus zwei Bauteilen**

(30) Priorität: 31.05.2011 DE 102011076759
(71) Anmelder: Robert Bosch GmbH, 70442 Stuttgart (DE)
(72) Erfinder: Bormann, Axel, 96049 Bamberg (DE)

(57) **Zusammenfassung**

Die Erfindung betrifft ein Verfahren zum Herstellen einer Pressverbindung (100), bei dem ein Bauteil (2; 55) in eine im Bereich der Pressverbindung (100) ausgebildete Aufnahme (3) eines anderen Bauteils (1; 51) eingeführt wird, worauf anschließend an der Außenfläche des anderen Bauteils (1; 51) wenigstens eine Schweißnaht als Blindschweißnaht (6; 6a bis 6c) ausgebildet wird, deren Schweißtiefe (t) nur über einen Teil der Wanddicke (a) des anderen Bauteils (1; 51) reicht. Erfindungsgemäß ist es vorgesehen, dass die wenigstens eine Blindschweißnaht (6; 6a bis 6c) am anderen Bauteil (1; 51) als radial umlaufende Blindschweißnaht (6; 6a bis 6c) ausgebildet wird.

## Beschreibung

### Stand der Technik

Die Erfindung betrifft ein Verfahren zum Herstellen einer Pressverbindung zwischen zwei Bauteilen nach dem Oberbegriff des Anspruchs 1. Ferner betrifft die Erfindung ein Bauteileverbund aus zwei Bauteilen, der unter Verwendung eines erfindungsgemäßen Verfahrens hergestellt wurde.

Ein Verfahren zum Herstellen einer Pressverbindung nach dem Oberbegriff des Anspruchs 1 ist aus der DE 103 03 853 B4 bekannt. Das bekannte Verfahren dient der Herstellung einer Pressverbindung zwischen zwei rohrförmigen Bauteilen, wobei die beiden Bauteile ein unter Hochdruck stehendes Rail in einer Brennkraftmaschine ausbilden. An dem äußeren Bauteil sind darüber hinaus Anschlussstutzen angeordnet, die über Schweißverbindungen mit dem äußeren Bauteil verbunden sind. Die in der genannten Schrift offenbarten gegenüberliegend angeordneten Blindschweißnähte zum Herstellen der Pressverbindung verlaufen in Längsrichtung der beiden rohrförmigen Bauteile. Nach dem Erkalten der Schweißnähte zieht sich das Material des äußeren Bauteils zusammen, so dass eine Umfangsverkürzung des äußeren Bauteils erzielt wird, die die gewünschte Pressverbindung mit dem inneren Bauteil erzeugt. Zur Ausbildung der Blindschweißnähte ist es erforderlich, dass das äußere Bauteil in den entsprechenden Winkellagen der Blindschweißnaht frei von weiteren Bauteilen oder ähnlichem ist, damit die Blindschweißnähte über die gesamte Länge des äußeren Bauteils ausgebildet werden können.

### Offenbarung der Erfindung

Ausgehend von dem dargestellten Stand der Technik liegt der Erfindung die Aufgabe zugrunde, ein Verfahren zum Herstellen einer Pressverbindung nach dem Oberbegriff des Anspruchs 1 vorzuschlagen, das eine alternative Anordnung der wenigstens einen Blindschweißnaht an dem zweiten Bauteil ermöglicht. Insbesondere soll es dabei auch ermöglicht werden, in der Länge relativ kurze (äußere) Bauteile mittels der Pressverbindung sicher mit dem radial inneren Bauteil zu verbinden. Diese Aufgabe wird bei einem Verfahren zum Herstellen einer Pressverbindung mit den Merkmalen des Anspruchs 1 erfindungsgemäß dadurch gelöst, dass die wenigstens eine Schweißnaht am zweiten, radial äußeren Bauteil als radial umlaufende Schweißnaht ausgebildet wird. Dadurch ist nicht nur eine sichere Pressverbindung bei axial relativ kurz bauenden äußeren Bauteilen möglich, sondern es wird zusätzlich ermöglicht, die Bereiche des äußeren Bauteils, an denen die wenigstens eine Schweißnaht nicht angeordnet bzw. ausgebildet ist, in beliebiger Art und Weise entweder zum Verbinden mit anderen Bauteilen, oder zur Wirkverbindung mit anderen Bauteilen auszubilden.

Vorteilhafte Weiterbildungen des erfindungsgemäßen Verfahrens zum Herstellen einer Pressverbindung sind in den Unteransprüchen angegeben. In den Rahmen der Erfindung fallen sämtliche Kombinationen aus zumindest zwei von in den Ansprüchen, der Beschreibung und/oder den Zeichnungen offenbarten Merkmalen.

Besonders bevorzugt ist ein Verfahren, bei dem der Durchmesser der beiden Bauteile im Bereich der Pressverbindung mit einer Spielpassung ausgebildet wird. Dadurch ist insbesondere eine einfache Montage der beiden Bauteile ohne zusätzliche Werkzeughilfsmittel, insbesondere von Einpresswerkzeugen, möglich.

Zur Ausbildung der radial umlaufenden (Blind)Schweißnaht wird in einer ersten Variante der Erfindung vorgeschlagen, dass die wenigstens eine Schweißnaht als geschlossene, ringförmige Schweißnaht ausgebildet ist. Dadurch ist der Bereich der Schweißnaht in Bezug auf die axiale Erstreckung des zweiten Bauteils vorteilhafterweise relativ gering.

Alternativ ist es jedoch auch möglich, dass die wenigstens eine Schweißnaht als spiralförmige Schweißnaht ausgebildet ist. Eine derartige Ausbildung hat den Vorteil einer relativ gleichmäßigen Erzeugung der zum Ausbilden der Pressverbindung erforderlichen Spannungen in den Bauteilen.

Das erfindungsgemäße Verfahren findet bevorzugt Verwendung bei im Durchmesser relativ kleinen Bauteilen. Gemeint sind hier Bauteile, bei denen das erste Bauteil einen Außendurchmesser von weniger als 6mm, vorzugsweise weniger als 5mm, und das zweite Bauteil einen Außendurchmesser von weniger als 4mm, vorzugsweise weniger als 2mm aufweist.

Derartige Schweißnähte lassen sich im industriellen Maßstab besonders einfach und genau durch Verwendung einer Laserstrahleinrichtung erzeugen.

Hierbei ist es zum Erzeugen der erforderlichen Spannungen bevorzugt vorgesehen, dass die Schweißtiefe der wenigstens einen Schweißnaht mehr als 50%, vorzugsweise zwischen 70% und 90%, der Wanddicke des ersten Bauteils beträgt.

Besonders bevorzugt ist der Einsatz des erfindungsgemäßen Bauteils bei Bauteileverbunden, die Bestandteil eines Kraftstoffinjektors einer Brennkraftmaschine sind.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch zwei Bauteile, die mittels einer erfindungsgemäßen Pressverbindung miteinander verbunden sind,
- Fig. 2 und Fig. 3: Seitenansichten auf unterschiedliche Formen bzw. Anordnungen der zum Herstellen der Pressverbindung verwendeten Blindnähte und
- Fig. 4: einen Ausschnitt aus einem Kraftstoffinjektor, bei dem zwei Bauteile mittels einer erfindungsgemäßen Pressverbindung miteinander verbunden sind.

Gleiche Bauteile bzw. Bauteile mit gleicher Funktion sind in den Figuren mit den gleichen Bezugsziffern versehen.

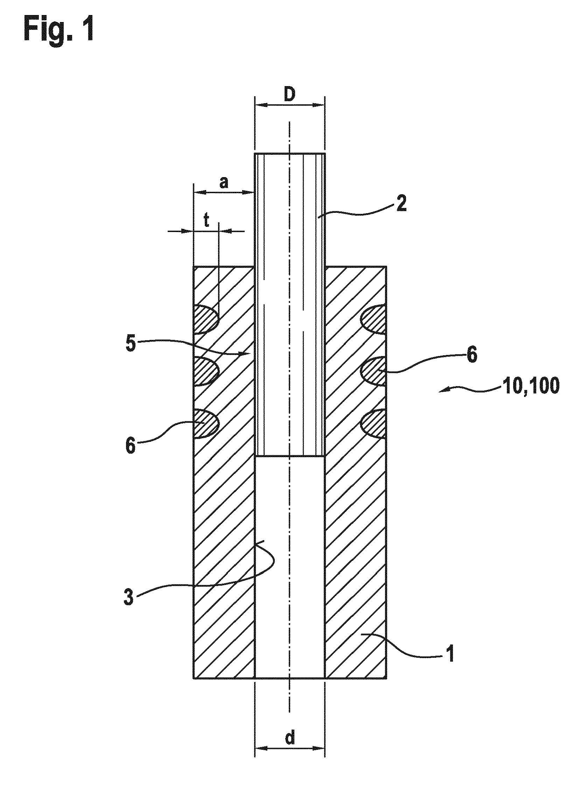

In der Fig. 1 ist ein aus zwei Bauteilen 1, 2 bestehender, mittels einer erfindungsgemäßen Pressverbindung 100 hergestellter Bauteileverbund 10 dargestellt. Das erste Bauteil 1 ist im dargestellten Ausführungsbeispiel rohr- bzw. hülsenartig ausgebildet und besteht aus Metall. Es weist eine durchgehende Ausnehmung 3 mit konstantem Durchmesser d auf. Innerhalb der Ausnehmung 3 des ersten Bauteils 1 ist das zylindrisch bzw. stiftförmig ausgebildete zweite Bauteil 2 aufgenommen. Das zweite Bauteil 2 besteht vorzugsweise ebenfalls aus Metall und weist innerhalb des in der Ausnehmung 3 angeordneten Abschnitts ebenfalls einen konstanten Durchmesser D auf. Die beiden Durchmesser d, D der beiden Bauteile 1 und 2 sind derart aufeinander abgestimmt, dass bei der Montage des zweiten Bauteils 2 mit dem ersten Bauteil 1, d.h. beim Einschieben des zweiten Bauteils 2 in die Ausnehmung 3 des ersten Bauteils 1, zwischen den beiden Bauteilen 1, 2 eine Spielpassung ausgebildet ist.

Ergänzend wird erwähnt, dass anstelle einer (durchgehenden) Ausnehmung 3 am ersten Bauteil 1 das erste Bauteil 1 auch eine entsprechende Sacklochbohrung aufweisen kann, in die das zweite Bauteil 2 in Analogie zur Ausnehmung 3 eingeschoben wird.

In dem axialen Überschneidungsbereich 5 der beiden Bauteile 1 und 2 sind am Außenumfang des ersten Bauteils 1 im Ausführungsbeispiel drei radial umlaufende Blindschweißnähte, im Folgenden nur als Blindnähte 6 bezeichnet, in im Ausführungsbeispiel gleichen Abständen in Längsrichtung des Bauteils 2 zueinander angeordnet. Die Blindnähte 6 sind über den gesamten Umfang des Bauteils 1 ausgebildet, d.h., dass sie jeweils ringförmig (geschlossen) sind.

Vorzugsweise werden die Blindnähte 6 mittels einer nicht dargestellten Laserstrahleinrichtung ausgebildet. Die Blindnähte 6 weisen eine, bezogen auf die Wanddicke a des ersten Bauteils 1 ausgebildete, Eindringtiefe t von vorzugsweise mehr als 50% der Wanddicke a, insbesondere zwischen 70% und 90% der Wanddicke a auf.

Zum Ausbilden der erfindungsgemäßen Pressverbindung 100 zwischen den beiden Bauteilen 1 und 2 wird das zweite Bauteil 2 in die in der Fig. 1 dargestellte Position in das Bauteil 1 eingeschoben und anschließend werden die drei Blindnähte 6 erzeugt. Durch das Erstarren des Materials der Blindnähte 6 findet ein Schrumpfprozess statt, der auf der dem zweiten Bauteil 2 zugewandten Innenwand des ersten Bauteils 1 eine Zugspannung erzeugt, die die gewünschte Pressverbindung 100 ausbildet.

Insbesondere ist es vorgesehen, dass das zweite Bauteil 2 einen Außendurchmesser D von weniger als 4mm, vorzugsweise weniger als 2mm aufweist. Ebenso ist es vorzugsweise vorgesehen, dass das erste Bauteil 1 einen Außendurchmesser von weniger als 6mm, vorzugsweise weniger als 5mm aufweist.

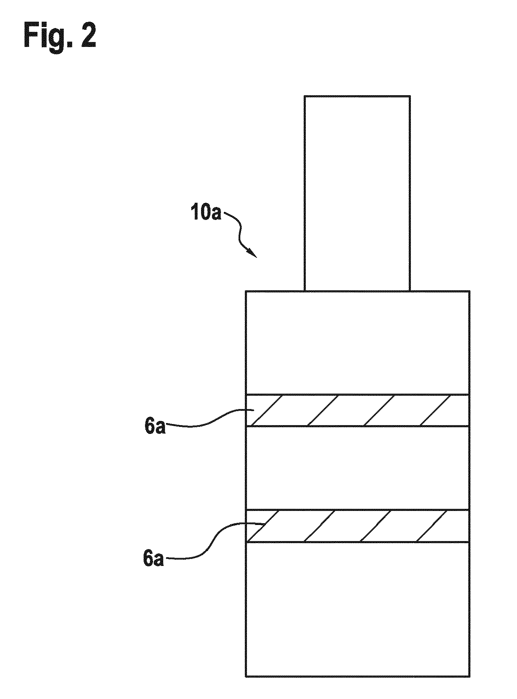

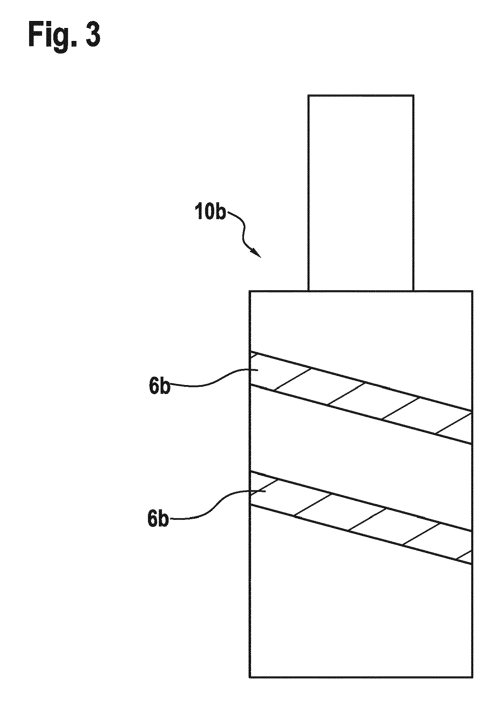

In der Fig. 2 ist ein Bauteileverbund 10a unter Verwendung zweier parallel zueinander angeordneter, umlaufender Blindnähte 6a dargestellt. Demgegenüber ist bei der Fig. 3 eine Bauteileverbund 10b dargestellt, bei dem lediglich eine einzige Blindnaht 6b vorgesehen ist, die spiralförmig an der Außenwand des zweiten Bauteils 2 angeordnet ist.

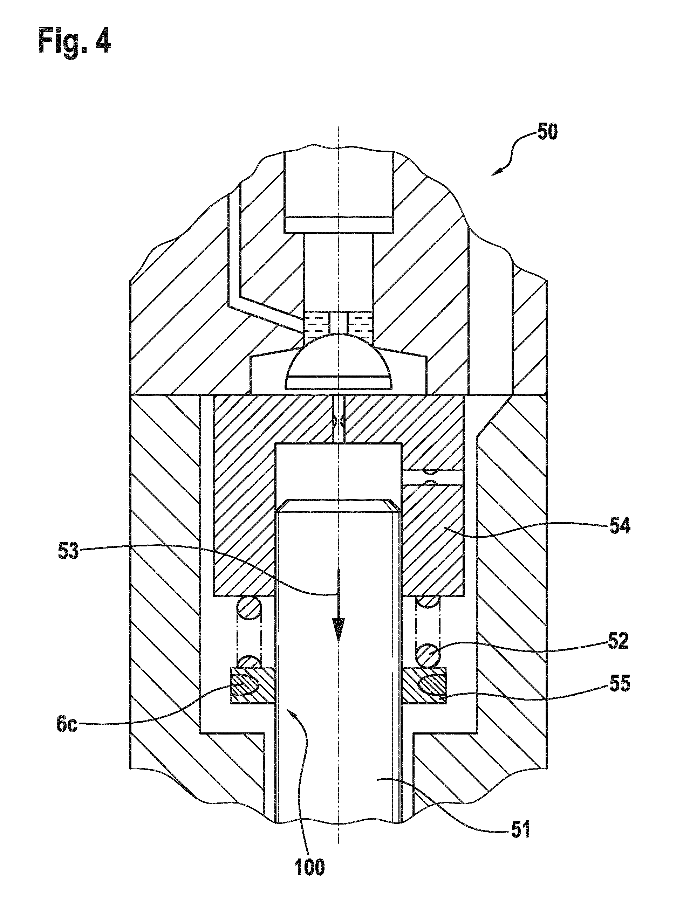

In der Fig. 4 ist ein Kraftstoffinjektor 50 dargestellt, wie er insbesondere als Kraftstoffinjektor 50 in einer selbstzündenden Brennkraftmaschine Verwendung findet. In dem dargestellten Bereich des Kraftstoffinjektors 50 erkennt man einen Ventilsteuerkolben 51, der von der Federkraft einer Druckfeder 52 in Richtung des Pfeils 53 gedrückt wird. Hierbei ist die Druckfeder 52 zwischen der Unterseite eines Federtellers 54 und einem ringförmigen Lagerring 55 angeordnet, wobei der Lagerring 55 mittels einer Blindnaht 6c unter Ausbildung einer Pressverbindung 100 mit dem Ventilsteuerkolben 51 fest verbunden ist.

Selbstverständlich liegt es im Rahmen der Erfindung, eine erfindungsgemäße Pressverbindung 100 an beliebigen, dafür geeigneten Orten innerhalb eines Kraftstoffinjektors 50 vorzusehen. Ferner ist die Erfindung nicht auf Pressverbindungen 100 im Bereich von Kraftstoffinjektoren 50 beschränkt, sondern kann bei beliebigen anderen Bauteilen eingesetzt werden.

Die soweit beschriebene Pressverbindung 100 kann in vielfältiger Art und Weise abgewandet bzw. modifiziert werden, ohne vom Erfindungsgedanken abzuweichen. Insbesondere kann es auch vorgesehen sein, dass mehrere Blindnähte 6, 6a bis 6c an einem Bauteil ausgebildet werden, die sowohl ringförmige Blindnähte 6, 6a, 6c, als auch spiralförmige Blindnähte 6b umfassen. Wesentlich ist lediglich, dass die Blindnähte 6, 6a bis 6c radial an dem entsprechenden Bauteil angeordnet bzw. ausgebildet sind.

## Patentansprüche

1. Verfahren zum Herstellen einer Pressverbindung (100), bei dem ein Bauteil (2; 55) in eine im Bereich der Pressverbindung (100) ausgebildete Aufnahme (3) eines anderen Bauteils (1; 51) eingeführt wird, worauf anschließend an der Außenfläche des anderen Bauteils (1; 51) wenigstens eine Schweißnaht als Blindschweißnaht (6; 6a bis 6c) ausgebildet wird, deren Schweißtiefe (t) nur über einen Teil der Wanddicke (a) des anderen Bauteils (1; 51) reicht,
**dadurch gekennzeichnet,**
**dass** die wenigstens eine Blindschweißnaht (6; 6a bis 6c) am anderen Bauteil (1; 51) als radial umlaufende Blindschweißnaht (6; 6a bis 6c) ausgebildet wird.

2. Verfahren nach Anspruch 1,
**dadurch gekennzeichnet,**
**dass** der Durchmesser (d, D) der beiden Bauteile (1, 2; 51, 55) im Bereich der Pressverbindung (100) mit einer Spielpassung ausgebildet wird.

3. Verfahren nach Anspruch 1 oder 2,
**dadurch gekennzeichnet,**
**dass** die wenigstens eine Blindschweißnaht (6; 6a; 6c) als geschlossene, ringförmige Blindschweißnaht (6; 6a; 6c) ausgebildet ist.

4. Verfahren nach Anspruch 1 oder 2,
**dadurch gekennzeichnet,**
**dass** die wenigstens eine Blindschweißnaht (6b) als spiralförmige Blindschweißnaht (6b) ausgebildet ist.

5. Verfahren nach einem der Ansprüche 1 bis 4,
**dadurch gekennzeichnet,**
**dass** das andere Bauteil (1; 51) zumindest im Bereich der Pressverbindung (100) stiftförmig ausgebildet ist und aus Metall besteht.

6. Verfahren nach einem der Ansprüche 1 bis 5,
**dadurch gekennzeichnet,**
**dass** das Bauteil (2; 55) einen Außendurchmesser von weniger als 6mm, vorzugsweise weniger als 5mm, und das andere Bauteil (1; 51) einen Außendurchmesser von weniger als 4mm, vorzugsweise weniger als 2mm aufweist.

7. Verfahren nach einem der Ansprüche 1 bis 6,
**dadurch gekennzeichnet,**
**dass** die wenigstens eine Blindschweißnaht (6; 6a bis 6c) durch eine Laserstrahleinrichtung erzeugt wird.

8. Verfahren nach einem der Ansprüche 1 bis 7,
**dadurch gekennzeichnet,**
**dass** die Schweißtiefe (t) der wenigstens einen Blindschweißnaht (6; 6a bis 6c) mehr als 50%, vorzugsweise zwischen 70% und 90% der Wanddicke (a) des Bauteils (2; 55) beträgt.

9. Bauteileverbund (10; 10a; 10b), bestehend aus wenigstens zwei Bauteilen (1, 2; 51, 55), die mittels eines Verfahrens nach einem der Ansprüche 1 bis 8 miteinander verbunden sind.

10. Bauteileverbund nach Anspruch 9,
**dadurch gekennzeichnet,**
**dass** die beiden Bauteile (51, 55) Bestandteil eines Kraftstoffinjektors (50) einer Brennkraftmaschine sind.
